# EUROPÄISCHE PATENTSCHRIFT

(11) **EP 3 433 011 B1**
(45) Veröffentlichungstag und Bekanntmachung des Hinweises auf die Patenterteilung: **16.11.2022**
(21) Anmeldenummer: 17717089.1
(22) Anmeldetag: 21.03.2017
(51) Int. Cl.: B01J 19/24

(54) **REAKTOR ZUR HERSTELLUNG VON SYNTHESEGAS**
REACTOR FOR PRODUCING SYNTHESIS GAS
RÉACTEUR POUR LA PRODUCTION DE GAZ DE SYNTHÈSE

(30) Priorität: 23.03.2016 DE 102016105492
(43) Veröffentlichungstag der Anmeldung: 30.01.2019
(73) Patentinhaber: Karlsruher Institut für Technologie, 76131 Karlsruhe (DE)
(72) Erfinder: PFEIFER, Peter, 76351 Linkenheim (DE); PIERMARTINI, Paolo, 76187 Karlsruhe (DE); BÖLTKEN, Tim, 76135 Karlsruhe (DE); DÜRRSCHNABEL, Robin, 76437 Rastatt (DE)
(74) Vertreter: Fitzner, Uwe
(86) Internationale Anmeldenummer: PCT/EP2017/056715
(87) Internationale Veröffentlichungsnummer: WO 2017/162681

(56) Entgegenhaltungen:
- EP-A1- 0 312 757
- EP-A1- 1 866 066
- EP-A2- 1 473 077
- WO-A1-2011/121433
- WO-A2-2005/084771
- US-A1- 2009 292 030

## Beschreibung

Die vorliegende Erfindung betrifft einen Reaktor zur Herstellung von Synthesegas, der gegebenenfalls fluiddicht mit einem Wärmetauscher verbunden ist, sowie ein Verfahren zur Herstellung von Synthesegas, bevorzugt unter Hochdruck.

Reaktoren und Verfahren zur Herstellung von Synthesegas, welche im Stand der Technik oft als eine Mischung aus Wasserstoff und Kohlenmonoxid definiert werden, sind aus der US 2004/0229752 A1 (entspricht US 7,226,547), EP 0 962 422 A1, DE 101 14 173 A1, WO 2011/083333A1 sowie der WO 98/49095 (entspricht der AU 7143498 A) und der US 7,261,751 B2 bekannt.

Bei der Herstellung von Synthesegas wird oft die katalytische Partialoxidation verwendet. Ein solcher Prozess ist aus der WO 02/47805 A2 und aus der WO 2006/032644 A1 bekannt.

Weitere Reaktoren und insbesondere Mikrovermischer sind aus der WO 2006/105870 A1 (entspricht EP 1 866 066 A) und der EP 1 674 152 A2 bekannt. Die DE 103 38 240 A1 offenbart einen Partialoxidations-Wasserdampfreaktor zur Reformierung eines Kohlenwasserstoff-Brennstoffstromes in einen Reformatstrom, der Wasserstoff umfasst. Reaktoren, enthaltend Mischer mit unterschiedlichen Zuleitungen und deren unterschiedliche Anordnung sind aus der US 2008/0140261 A1, JP 2002-292274 A sowie EP 1 473 077 A2 bekannt. Eine Strömungsumkehr eines Reaktanden vor der Mischung mit dem zweiten Reaktanden im Mischraum sowie ein Reaktor mit Gegenstromaufbau werden jedoch nicht offenbart. EP-A-0 312 757 offenbart einen Reaktor mit Mischraum.

Ein Problem, das aus dem Stand der Technik bekannter Reaktoren auftritt, ist der thermomechanische Stress. Dabei handelt es sich insbesondere um eine thermomechanische Belastung bzw. thermomechanische Ermüdung der eingesetzten Materialien aufgrund von Temperaturänderungen, insbesondere durch das Auftreten von Thermospannungsgradienten.

Da viele Materialien bei Temperaturänderung auch ihre thermomechanischen Eigenschaften ändern, können z.B. thermische Ausdehnung, Erweichung, Fasernumwandlung oder Sinterstufen auftreten. Diese werden z.B. mittels thermomechanischer Analyse untersucht, bei welcher die Dimensionsänderung von Materialien als Funktion der Temperatur und/oder Zeit unter definierten mechanischen Belastungen bestimmt wird, wie z.B. gemäß DIN 51005, ASTM E 831, ASTM D 696, ASTD D 3386 und ISO 11359.

Neben thermomechanischem Stress können auch Probleme bei der Kontrolle und Gewährleistung eines optimalen Verhältnisses von Wasserstoff zu Kohlenmonoxid im Produktgas auftreten. Außerdem kann es zu einer Koksbildung kommen, die eine Verstopfungsgefahr darstellt. Um einen sicheren Betrieb zu gewährleisten ist ferner eine Homogen-Reaktion zwischen 02 und Brennstoff zu vermeiden. Diese führt zu einer Explosionsgefahr.

Ein weiteres Problem, das bei vielen bisher bekannten Reaktoren auftritt, ist eine schwierige, und damit aufwendige Wartung. Insbesondere gestaltet sich die Zugänglichkeit einzelner Elemente und Bauteile der Reaktoren zur Reparatur oder für den Austausch als schwierig. Dies tritt meistens auf wenn keine Stromumkehr im Reaktor erfolgt.

Bei Prozessen, in denen gasförmige Edukte in Produkte, enthaltend Flüssigkomponenten umgewandelt werden, ist gemäß Stand der Technik entweder eine homogene Partialoxidation oder eine katalytische Reformierung mit Beheizung durch Brennersysteme oder eine Kombination dieser beiden Verfahren anzuwenden. Die bisher bekannten Verfahren benötigen jedoch spezifisch zur Produktionsleistung viel Platz und sind deshalb nicht für den Einsatz in mobilen Container- oder Skid-basierten Systemen geeignet.

Als Alternative dazu wird die katalytische Partialoxidation zur Prozessintensivierung vorgeschlagen. Dieses Verfahren ist jedoch in den bekannten Ausführungen - wie z.B. einem Rohrreaktor oder einem monolytischen Reaktorsystem - sicherheitstechnisch schwer zu beherrschen, da Homogen-Reaktionen und/oder zu hohe Temperaturen am Katalysator auftreten können. Dies kann zu Bauteilversagen führen, insbesondere, falls das Synthesegas bei Druck erzeugt werden soll. Als Edukte werden z.B. Methan, Erdgas oder Erdölbegleitgas (mit weiteren höheren Kohlenwasserstoffbestandteilen) oder erneuerbare Gase wie z.B. Biogas eingesetzt. Eine Kompression dieser Edukte ist günstiger und technisch einfacher realisierbar. Unter dem verwendeten relativ hohen Druck kann allerdings auch Koks entstehen. Dies wird durch manche Konzepte zur Temperaturkontrolle verstärkt.

Um die Reaktionstemperatur zu erreichen, muss in vielen Ausführungen auch die Wärme im Abgas vollständig rückgeführt werden. Bei der katalytischen Partialoxidation (kurz CPOX) ist das thermische Management des Gaseintritts, also die Kontrolle und Einstellung der gasförmigen Edukte, von großer Bedeutung, um im Falle einer Durchsatzänderung ein Überschreiten von Explosions- und/oder Temperaturspitzen zu vermeiden.

Aufgabe der vorliegenden Erfindung war es, einen Reaktor sowie ein Verfahren zur Herstellung von Synthesegas zur Verfügung zu stellen, bei welchem die Nachteile des Standes der Technik nicht mehr auftreten.

Der Reaktor soll eine leichte Handhabung und Zusammenbau ermöglichen, die Wartung und der Austausch einzelner Bauteile soll schnell und einfach ausführbar sein.

Insbesondere soll die Herstellung und/oder die weitere Verwendung von Synthesegas für die Herstellung von Kraftstoffen oder Chemikalien unter hohem Druck gewährleistet sein. Zusätzlich soll der Reaktor und das Verfahren eine Prozessintensivierung, also eine Erhöhung der Effektivität und/oder Ausbeute, der Synthesegaserzeugung, insbesondere durch eine katalytische Partialoxidation ermöglichen. Sowohl der Reaktor als auch das Verfahren sollen selbstständig und/oder in Kombination die sicherheitstechnischen Probleme, insbesondere bei der Partialoxidation durch Gasphasenreaktion und/oder Temperaturspitzen am Katalysator vermeiden. Diese sicherheitstechnischen Probleme können zur Zerstörung der Funktionsweise des Reaktors und zu einer schlechten Ausbeute führen. Vom besonderen Vorteil sind synergetische Effekte durch den Reaktor im Zusammenspiel mit dem Herstellungsprozess, also durch bauliche und prozesstechnische Merkmale.

Gelöst wird diese Aufgabe durch einen Reaktor gemäß Anspruch 1 zur Herstellung von Synthesegas mit Mischer, Mischraum, Reaktorraum, Zuleitungen für mindestens zwei fluide Reaktanden und Ableitung für mindestens ein fluides Produkt und eine diese umgebende Reaktorhülle, enthaltend zwischen Reaktorhülle und Mischer im Inneren des Reaktors eine äußere fluiddichte Zuleitung für mindestens einen Reaktanden in welcher mindestens eine fluiddichte Zuleitung für einen weiteren Reaktanden angeordnet ist.

Sowohl der Reaktor als auch die einzelnen Bauteile sind aus Materialien und so zusammengebaut, dass hohe Drucke bis mindestens 30 bar oder mehr im laufenden Betrieb ohne Beschädigung gewährleistet. Die Materiealienauswahl ergibt sich einerseits durch den Druck, mit welchem die Edukte in den Reaktor eingespeist werden, und andererseits durch die hohen Betriebstemperaturen.

Im Sinne der Erfindung wird ein hoher Druck als 10 - 50 bar definiert, bevorzugt 15 - 40, besonders bevorzugt 20 - 35, insbesondere ca. 30 bar mit Schwankungen Werte von jeweils 20%, bevorzugt 10%, besonders bevorzugt 5%, insbesondere 3%.

Der Reaktor kann außen jede beliebige Form aufweisen, bevorzugt als Zylinder oder Quader, ggf. mit abgerundeten Kanten. Der Reaktor weist einen fluiddichten und druckstabilen sich öffnenden und ggf. abnehmbaren Deckel auf, durch welchen die einzelnen Elemente bzw. Bauteile des Reaktors zugänglich und entnehmbar sind.

In einer Ausführung der vorliegenden Erfindung hat der Reaktor im Wesentlichen die Form eines Zylinders, der gegebenenfalls außen eine, gegebenenfalls, quaderförmige Isolierung aufweist . Im Wesentlichen die Form eines Zylinders bedeutet, dass die kreisförmigen Grundflächen des Zylinders auch eine Wölbung aufzeigen können und/oder dass diese zur Mantelfläche eine abgerundete Kante aufweisen. Ebenso kann in einer Alternative auch die Mantelfläche eine Wölbung aufweisen. Im Grenzfall kann also die im Wesentlichen zylindrische Form ein Sphäroid oder Ovoid sein.

In einer Alternative besteht der Reaktor aus zwei Halbschalen. Ausgehend von dem Modell des Zylinders hat somit jede Halbschale als Grundfläche einen Halbkreis. Entsprechend ändert sich die Form der Halbschale bei Sphäroiden und Ovoiden. Die beiden Halbschalen sind fluid- und/oder druck-dicht miteinander verbunden, vorzugsweise verschraubt. Dies ermöglicht eine Öffnung der Reaktorhülle und somit des Reaktors, wodurch eine leichte Wartung und Austausch von Elementen gewährleistet ist. Die umgebene äußere Isolierung ist entsprechend ebenfalls aus mindestens zwei Teilen aufgebaut, so dass die beiden Halbschalen des Reaktors geöffnet werden können.

In einer anderen Alternative hat der erfindungsgemäße Reaktor die Form eines Quaders. Auch in dieser Alternative kann der Reaktor aus zwei entsprechend quaderförmigen Schalen aufgebaut sein. Möglich ist jedoch auch das Öffnen über einen Deckel. Der Deckel erstreckt sich in dieser Ausführung im Wesentlichen über eine gesamte Seitenfläche. Im Wesentlichen bedeutet in diesem Fall, dass der Deckel mindestens 70 - 100%, bevorzugt 80 - 100%, besonders bevorzugt 90 - 100% der Seitenfläche einnimmt.

In einer weiteren Ausführung ist die Reaktorhülle mithin so zu öffnen, dass alle Bauteile des Reaktors zugänglich sind und einzeln austauschbar.

In einer Alternative sind alle Anschlüsse, also sowohl Zu- als auch Ableitungen an einer Seite des Reaktors angebracht.

Eine solche Konstruktion ermöglicht eine einfache technische Wartung.

Die einzelnen Bauteile und der Reaktor sind fluiddicht so verschließbar, dass im Inneren die o.g. hohen Drucke gewährleistet sind.

Im Sinne der Erfindung ist Synthesegas eine Mischung enthaltend oder bestehend aus Wasserstoff und Kohlenmonoxid, H2:CO.

Das erfindungsgemäße Produkt das aus dem Reaktor abgeleitet wird, enthält in einer Ausführung zusätzlich CO2 und/oder Wasser, gegebenenfalls als Wasserdampf.

In einer Ausführung ist das erfindungsgemäße Produkt, welches aus dem Reaktor abgeleitet wird, Reformatgas oder Reformat enthaltend oder bestehend aus Wasserstoff, Kohlenmonoxid, Kohlendioxid und/oder Wasser, gegebenenfalls als Wasserdampf.Wasser, gegebenenfalls als Wasserdampf wird in einer Alternative später entfernt.

In einer Alternative der vorliegenden Erfindung ist mindestens einer der beiden fluiden Reaktanden ein Stoffgemisch. In einer weiteren Alternative sind beide fluide Reaktanden jeweils Stoffgemische.

Als Reaktanden, also Edukte, werden Fluide, enthaltend oder bestehend aus Kohlenwasserstoffen, bevorzugt Alkane, Alkene und/oder Alkohole mit C1 - C10 Kohlenstoffketten, insbesondere Methan, Wasser, gegebenenfalls als Wasserdampf, Sauerstoff und/oder Luft eingesetzt. Die Reaktanden können noch weitere Stoffe enthalten, wie z.B. höhere Kohlenwasserstoffe oder zyklische Verbindungen wie Toluol, Benzol und Xylol, Kohlendioxid CO2 sowie Stickstoff N2. Die Kohlenwasserstoffe, bevorzugt Alkane, Alkene und/oder Alkohole mit C1 - C10 Kohlenstoffketten, insbesondere Methan, sowie höhere Kohlenwasserstoffe oder zyklische Verbindungen wie Toluol, Benzol und Xylol werden als Brennstoff bezeichnet.

Erfindungsgemäß wird der Begriff "Fluid" für Gase und/oder Flüssigkeiten verwendet. In einer Alternative der vorliegenden Erfindung ist mindestens einer der beiden fluiden Reaktanden ein Stoffgemisch. In einer weiteren Alternative sind beide fluide Reaktanden jeweils Stoffgemische.

Innerhalb der Reaktorhülle sind im Reaktorraum ein Mischer, ein Mischraum, ein Reaktionsraum sowie Zu- und Ableitungen angeordnet. In einer Ausführung kann die Reaktorhülle innen, also im Reaktorraum, oder außen Isolierungen aufweisen. Als axial wird die Richtung bzw. Anordnung parallel zu den Zuleitungen bezeichnet, senkrecht dazu als radial.

Die Zuleitungen sind zwischen Reaktorhülle und Mischer angeordnet und führen die Reaktanden in den Reaktor; letztendlich zu dem Mischraum. Ferner führt aus dem Reaktorraum eine Ableitung für das Synthesegas als Produkt durch die Reaktionshülle nach außen.

Die mindestens zwei Zuleitungen für die mindestens zwei fluide Reaktanden sind so angeordnet, dass sich mindestens eine fluiddichte Zuleitung innerhalb einer weiteren, also einer äußeren fluiddichten Zuleitung, angeordnet ist. Dies betrifft insbesondere Zuleitungen innerhalb des Reaktors, also im Reaktorraum zwischen Reaktorhülle und Mischer.

In einer weiteren Ausführung der vorliegenden Erfindung ist die innere Zuleitung länger als die äußere Zuleitung, die innere Zuleitung ist mithin überstehend gegenüber der äußeren Zuleitung.

In einer Ausführung sind die Zuleitungen ein Doppelrohr, also ein äußeres Rohr mit einem größerem Durchmesser, in welchem mindestens ein zweites Rohr mit einem geringeren Durchmesser, bevorzugt konzentrisch angeordnet ist. Somit ist gewährleistet, dass ein Reaktant fluiddicht abgetrennt von einem zweiten Reaktanden im äußeren Rohr zu dem Mischer geleitet wird und der mindestens zweite Reaktant in dem inneren Rohr ebenfalls dem Mischer zugeleitet wird.

Der erfindungsgemäße Reaktor enthält somit mindestens einen Mischer. Der Mischer enthält einen Mischerboden, mindestens eine Mischerscheibe für ein erstes Fluid, mindestens eine Mischerscheibe für ein zweites Fluid, einen Mischerabschluss und einen Deckel, oder besteht daraus.

In einer Ausführung hat der Mischerboden die Form einer Scheibe mit einer konzentrischen Bohrung in der Mitte, durch welche die oben beschriebene innere Zuleitung geleitet wird oder der Reaktand der inneren Zuleitung. Der Mischerboden weist weitere Bohrungen für den Durchfluss des ersten Reaktanden auf, der aus der äußeren Zuleitung eingeleitet wird. Der Mischerboden wird somit so auf die äußere Zuleitung aufgesetzt, dass der Reaktand der äußeren Zuleitung nur duch die weiteren Bohrungen axial strömen kann. Die beiden Reaktanden sind mithin noch voneinander getrennt, noch nicht gemischt.

Dem Mischerboden folgend ist mindestens eine erste Mischerscheibe angeordnet. Diese weist ebenfalls in der Mitte eine konzentrische Bohrung für die Durchleitung der inneren Zuleitung oder des Reaktanden der inneren Zuleitung auf. Die Mischerscheibe enthält ferner weitere Bohrungen analog zu dem Mischerboden für die Durchleitung des zweiten Reaktandes aus der äußeren Zuleitung. Diese Bohrungen für den Reaktanden der äußeren Zuleitung sind in der Mischerscheibe und Mischerboden gleich angeordnet und positioniert für den Durchfluss des Reaktanden der äußeren Zuleitung ohne Vermischung mit dem Reaktanden der inneren Zuleitung. Versetzt von den Bohrungen für den Reaktanden der äußeren Zuleitung weist die erste Mischerscheibe Bohrungen für den Reaktanden der inneren Zuleitung auf, die unabhängig und getrennt von der in der Mitte angeordneten konzentrischen Bohrung sind. Diese Bohrungen für den Reaktanden der inneren Zuleitung werden von dem Mischerboden abgedeckt und verschlossen. Von diesen Bohrungen führen Kanäle / Rinnen - also Vertiefungen in der dem Mischerboden zugewandten Seite -in der ersten Mischerscheibe nach außen, bevorzugt tangential, also in den Mischraum zur Freisetzung des Reaktanden der inneren Zuleitung in den Mischraum.

In einer Alternative hat die erste Mischerscheibe, abgesehen von der inneren konzentrischen Bohrung, doppelt so viele Bohrungen wie der Mischerboden, wovon jeweils die Hälfte dem Reaktanden der äußeren Zuleitung und die andere Hälfte dem Reaktanden der inneren Zuleitung zugeordnet sind.

Im Anschluss an die erste Mischerscheibe ist mindestens eine zweite Mischerscheibe angeordnet, versehen mit einer konzentrischen Bohrung in der Mitte, durch welche die oben beschriebene innere Zuleitung geleitet wird oder der Reaktand der inneren Zuleitung. Diese ist identisch mit der ersten Mischerscheibe, jedoch spiegelbildlich angeordnet. Sie weist somit auf der der ersten Mischerscheibe abgewandten Seite Kanäle / Rinnen auf. Diese Kanäle sind außerdem den Bohrungen für den Reaktanden der äußeren Zuleitung zugeordnet. Mithin sind die Kanäle der ersten Mischerscheibe versetzt zu denen der zweiten Mischerscheibe angeordnet, um eine Überschneidung der Kanäle zu verhindern. Die Kanalausgänge sind somit auf einer Ebene, was zu einer besseren Mischung führt.

Im Anschluss an die zweite Mischerscheibe ist ein Mischerabschluss angeordnet. Dieser ist identisch mit dem Mischerboden, die Bohrungen sind jedoch gegenüber den Bohrungen des Mischerbodens für den Reaktanden der äußeren Zuleitung versetzt angeordnet. Damit sind die Bohrungen der inneren Zuleitung oder dem Reaktanden der inneren Zuleitung zugeordnet. Der Mischerabschluss verschließt und deckt außerdem die Bohrungen der zweiten Mischerscheibe und die entsprechenden Kanäle für den Reaktanden der äußeren Zuleitung ab.

Abschließend im Anschluss an den Mischerabschluss ist ein Mischerdeckel angeordnet. Dieser weist Kanäle, also nicht durchgehende Bohrungen auf, die vom Zentrum der Mischerscheibe nach außen führen, doch vor dem Rand des Mischerdeckels abgeschlossen sind. Dadurch wird der Reaktand der inneren Zuleitung durch die Kanäle vom Zentrum des Deckels nach außen geleitet. Der Mischerdeckel ist so angeordnet, dass die Kanäle mit den Bohrungen des Mischerabschluss für den Reaktanden der inneren Zuleitung einen gemeinsamen Raum bilden. Dadurch wird der Strom des Reaktanden am Mischerdeckel umgekehrt.

Der Mischer wird auf den ineinander liegenden Zuleitungen der Reaktanden angebracht. In einer Variante wird er daran angeschweißt.

In einer Ausführung der vorliegenden Erfindung werden für den Aufbau des Mischers alle Scheiben miteinander verbunden und gegeneinander abgedichtet. Diese werden anschließend auf die überstehende Zuleitung gestülpt und daran befestigt, bevorzugt geschweißt. Durch diesen einfachen Aufbau kann lediglich am äußeren Rand eine Befestigung, bevorzugt ein Schweißen erfolgen. Dieser Aufbau wird durch den Mischerdeckel anschließend abgeschlossen.

In einer Ausführung ist der Mischer radial symmetrisch aufgebaut, insbesondere umfassend Mischerboden, beliebige gerade Anzahl an Mischerscheiben. Und Mischerabschluss.

Der Mischerboden, die Mischerscheiben und der Mischerabschluss weisen in der Mitte eine konzentrische Bohrung für den Durchstrom des Reaktanden der inneren Zuleitung auf. Der Reaktand der äußeren Zuleitung strömt durch die entsprechenden Bohrungen des Mischerbodens der ersten Mischerscheibe und der zweiten Mischerscheibe. Die Bohrungen der zweiten Mischerscheibe für den Reaktand der äußeren Zuleitung sind von dem Mischerabschluss abgedeckt, so dass der Reaktand durch die tangential nach außen liegenden Kanäle in den Mischerraum strömt. Der Reaktand der inneren Zuleitung strömt durch die konzentrisch in der Mitte angeordneten Bohrung des Mischerbodens, der beiden Mischerscheiben sowie des Mischerabschlusses bis zum Mischerdeckel. Hier erfolgt über die Schlitze des Mischerdeckels eine Strömungsumkehr, so dass der Reaktant durch den Mischerabschluss, die zweite Mischerscheibe und die erste Mischerscheibe bis zum Mischerboden strömt, der die Bohrungen für diese Reaktanden der ersten Mischerscheibe abdeckt. Durch die tangential nach außen gerichteten Kanäle strömt der Reaktant ebenfalls in den Mischerraum.

In einer weiteren Ausführung, insbesondere bei größeren Mischern mit höherem Gesamtdurchsatz werden die Mischerscheiben abwechselnd, nacheinander wiederholt angeordnet, so dass eine Mischung über den gesamten Mischraum gewährleistet ist und die Strömungsgeschwindigkeit in den Austrittskanälen vorzugsweise 50 m/s nicht übersteigt

Bei den oben beschriebenen Bohrungen und Scheiben handelt es sich erfindungsgemäß um Öffnungen und scheibenförmige Bauteile im weitesten Sinne, also nicht zwangsläufig um kreisförmige Öffnungen und Bauteile, vielmehr können die Öffnungen und Bauteile jede beliebige Form (also Querschnitt) besitzen.

In einer Ausführung ist der Querschnitt der Zuleitungen und des Mischers kreisförmig. In einer Alternative kann der Querschnitt jedoch auch eine ovale oder rechteckige oder eine viereckige Form, gegebenenfalls mit abgerundeten Kanten, haben.

Als Materialien für den Reaktor bzw. die Reaktorhülle kommen Metalllegierungen, insbesondere Edelstahl, bevorzugt Eisenchrom-Legierungen und Nickel-Chrom-Legierungen zur Anwendung (FeCrAlloy, Nicrofer, Crofer)

Als Materialien für den Mischer und die entsprechenden Bauteile sind ebenfalls Metalllegierungen, Edelstahl, bevorzugt Eisenchrom-Legierungen und Nickel-Chrom-Legierungengeeignet.

Der Reaktor ist so konstruiert, dass sich der Mischraum am gegenüberliegenden Ende des Eintritts der Zuleitungen der Reaktanden und der Ableitung des Synthesegases durch die Reaktorhülle befindet.

In einer Ausführung ist der Mischraum zumindest teilweise mit keramischem Schaum oder Pulver befüllt. Die im Mischraum gebildete Fluidmischung wird an der gegebenenfalls isolierten Reaktorhülle in Richtung gegenüberliegendes Ende (an welchem die Zu- und Ableitungen durch die Reaktorhülle treten) umgelenkt. In einer Ausführung durchströmt das Fluid-Gemisch dabei den keramischen Schaum.

In einer bevorzugten Ausführung wird der Raum zwischen Mischer, bevorzugt Mikromischer und erstem Hitzeschild mit einem keramischen, porösen Material gefüllt. Dadurch kann eine Homogen-Reaktion verhindert werden. Das Füllmaterial, bevorzugt feinporig mit hohem Strömungswiderstand, wirkt als Flammensperre und ggf. als Hitzeschild. Dadurch erfolgt eine homogene Verteilung der Mischung der Reaktanden im Anschluss an den Mischer.

Der Reaktor besitzt in einer Ausführung einen Hitzeschild aus mindestens einem monolitischen Körper. In einer Alternative enthält oder besteht er aus mindestens einem Monolit aus folgenden Materialien: **Al-Si-Mischoxide, Cordierit,** ZrO₂ oder Hochtemperaturstählen. Um die Zuleitung herum angeordnet, so dass das Fluid-Gemisch im Gegenstrom bezüglich der Zuleitungen das Hitzeschild durchdringt. Gegebenenfalls ist zwischen dem Mischraum und dem Hitzeschild ebenfalls keramischer Schaum oder Pulver angeordnet.

In einer Alternative ist der Monolith ein keramischer Schaum.

In einer Alternative ist der Hitzeschild aus mehreren Monolithen gebildet, die eine Lage um die Zuleitungen bilden.

An dieses Hitzeschild schließt sich der Reaktionsraum des Reaktors an.

Der Reaktionsraum wird ebenfalls aus mindestens einem Monolithen gebildet. Dieser Monolith ist ein mit Katalysator funktionalisierten Monolith, d.h. in einer Ausführung enthält oder besteht der Monolith aus folgenden Materialien: Al-Si-Mischoxide, Cordierit, ZrO₂ oder Hochtemperaturstählen.

In einer Alternative umfasst der Begriff Monolith auch andere (mikro)strukturierte Körper oder Packung von Katalysatorpulver.

In einer weiteren Ausführung ist der Reaktionsraum, der sich an den Hitzeschild anschließt, aus mehreren Monolithen gebildet.

Der oder die Monolithen des Reaktionsraums besitzen eine poröse Struktur mit einer Zelldichte von 200 bis 1.000 cpsi, bevorzugt 250 bis 800, besonders bevorzugt 200 bis 700, 350 bis 650, insbesondere 400 bis 600. Der oder die Monolithen sind mit Katalysator funktionalisiert, d.h. in den Poren befindet sich mindestens ein Katalysator für die Katalyse der Bildung von Synthesegas.

Als Katalysator werden Katalysatoren -enthaltend Edelmetalle bevorzugt Rodium und/oder Nickel eingesetzt. In einer Alternative werden Trägermaterialien eingesetzt um die Oberfläche für das Aktivmaterial Ni, Rh zu erhöhen. Dabei wird das Trägermaterial (typischerweise Al2O3) mit gängigen Verfahren wie Sol-Gel Technik, Washcoat oder ähnliches auf dem Monolithen aufgebracht, alternativ auf einem anderweitig beschichteten Körper wie z.B. ein mikrostrukturiertes System.

In einer Alternative zeigt der sich im Reaktionsraum befindende Katalysator, also in den Poren des Monolithen, einen Konzentrationsgradienten auf. Die Konzentration am Katalysator pro Volumeneinheit Monolith oder Zelle kann sich axial oder radial ändern.

In einer Variante enthält der Reaktionsraum bzw. der funktionalisierte Monolith unterschiedliche Bereiche, also Segmente mit unterschiedlicher Konzentration an Katalysator. In einer anderen Alternative enthält der Reaktionsraum Segmente mit unterschiedlichen Katalysatoren. In einer weiteren Alternative liegt eine Kombination unterschiedlicher Katalysatoren und unterschiedlicher Konzentrationen vor.

Die oben genannten Bereiche bzw. Segmente können auch einzelne Monolithe sein. Wesentlich ist, dass der Reaktionsraum von Monolithen als Lage um die Zuleitung der Reaktanden gebildet wird.

In einer Alternative kann jede Lage von Monolithen, also jede einzelne monolithische Zone, auch durch ein oder mehrere Schichten von Monolithen ausgestaltet sein. Eine einzelne Schicht kann ihrerseits aus mehreren Segmenten bestehen.

Als monolithische Zone ist dabei jede Zone des Reaktors gemeint, die aus Monolithen aufgebaut ist, bevorzugt der Reaktionsraum; in einer Variante aber auch zusätzlich der mindestens eine Hitzeschild.

Die einzelnen Segmente können unterschiedliche Strukturen, insbesondere Poren- bzw. Stellgrößen und Wände besitzen.

Der Reaktionsraum beispielsweise kann somit aus mehreren Schichten mehrerer Segmente aus Monolithen bestehen. Die einzelnen Segmente können unterschiedliche Zell- und Wandstrukturen bzw. -dimensionen aufweisen, und/oder mit unterschiedlichen Katalysatoren gefüllt oder beaufschlagt sein. Durch den Segment- oder Schichtaufbau der einzelnen Lagen, wie Hitzeschild und Reaktionsraum kann die Wärmeleitung gezielt in axialer oder dazu vertikaler, also radialer Richtung gesteuert werden. Ebenso kann die Strömung der Reaktanden gesteuert werden. In dem Reaktionsraum können die einzelnen Segmente und Schichten so aneinandergereiht werden, dass bezüglich des Katalysators ein Gradient aufgebaut wird und/oder unterschiedliche Katalysatoren eingesetzt werden können.

Eine Lage kann aus mehreren Schichten aufgebaut werden. Eine Lage ist mithin nicht zwangsläufig durch Segmente von Monolithen derselben Struktur definiert, sondern primär durch die Funktionsweise der Monolithen, die allerdings bestimmte Strukturen vorgeben kann.

In einer Ausführung der Erfindung schließt sich an den Reaktionsraum ein zweites Hitzeschild an, gebildet aus mindestens einem Monolithen. In einer Alternative umfasst der Begriff Monolith auch hier andere (mikro)strukturierte Körper oder Packung von Katalysatorpulver.

Im Anschluss an den Reaktionsraum, gegebenenfalls an den zweiten Hitzeschild, ist die Ableitung des Synthesegases angeordnet. Diese liegt an dem selben Ende bzw. auf derselben Seite des Reaktors wie die Zuleitung der Reaktanden. In einer Alternative erfolgt die Ableitung des Synthesegases aus einem Hohlraum, welcher sich an den Reaktionsraum oder an den zweiten Hitzeschild anschließt.

Der erfindungsgemäße Reaktor bietet folgende Vorteile:
Als besonders vorteilhaft erweist sich der erfindungsgemäße Aufbau des Reaktors für die Wartung und den Austausch einzelner Bauteile. Durch Öffnen des Reaktors ist jedes einzelne Element des Reaktors leicht zugänglich. Einzelne Bauteile wie z.B. Mischer, Hitzeschildreaktor aber auch einzelne Elemente wie z.B. monolithische Segmente, können leicht ausgetauscht werden.

Der Reaktoraufbau gewährleistet bevorzugt auch ein äußerst geringes Totvolumen. Ferner stellt er eine sehr kompakte Reaktionseinheit dar, kleiner um mindestens Faktor 10 als die aus dem Stand der Technik bekannten Reaktoren mit gleichem Umsatz. Mithin ist der Reaktor idealerweise einsetzbar in mobilen, schlüsselfertigen Container- oder Skid-basierten Anlagen.

Ferner wird durch den erfindungsgemäßen Reaktor eine hohe Prozessintensivierung erreicht, d.h. es können Reaktionen bei hohem Druck auf kleinem Raum beherrscht und kontrolliert werden.

Durch Verwendung des erfindungsgemäßen Mischers wird die Reaktorsicherheit zusätzlich erhöht, da die einzelnen Reaktanden erst hier zusammengeführt werden. Eine exotherme Reaktion mit hohen Temperaturspitzen ist somit vorher nicht möglich.

Der erfindungsgemäße Mischer ist außerdem einfach herstellbar und erfüllt hohe Sicherheitsstandards.

Aufgrund der bevorzugten tangentialen Strömung der Fluide aus dem Mischer durch die vorgesehenen Rinnen wird eine schnelle Vermischung erreicht. Ferner wird dadurch eine Rückdiffusion und ungewollte Zündung durch die Kanäle, insbesondere bei der Notabschaltung verhindert.

Außerdem verhindert der Gegenstromaufbau das Auftreten von axialem, thermodynamischen Stress durch die unterschiedlichen Materialien. Der Gegenstromaufbau bewirkt nur einen geringen Temperaturanstieg der Reaktanden beim Durchgang durch die Zuleitungen. Besonders vorteilhaft ist dabei die thermische Abschirmung der innen gelegenen Zuleitung vor der Reaktionswärme aus dem Reaktionsraum gegenüber von Verkokungsprozessen, insbesondere falls kohlenwasserstoffhaltige Reaktanden durchgeleitet werden. Dadurch ist der Reaktor langzeitbeständig.

Das dem Reaktionsraum vorgelagerte erste Hitzeschild bewirkt Temperaturen außerhalb der monolithischen Körper des Reaktionsraumes unterhalb der kritischen Werte für Homogen-Reaktionen. Bei einer bevorzugten adiabaten Reaktionsführung in radialer und/oder axialer Richtung wird die Temperatur sogar unterhalb der kritischen Werte abgesenkt.

Die axiale Wärmeleitung in den monolithischen Strukturen, Hitzeschild und Reaktionsraum erlaubt einen kontrollierten axialen Wärmetransport, so dass keine Vorheizung auf Reaktionstemperatur notwendig ist. Gleichzeitig wird das Temperaturmaximum gemildert. Durch die monolithische Struktur wird Wärmetransport durch Strahlung vermindert.

Außerdem kann die Reaktionswärme über die Temperaturdifferenz zwischen Ein- und Ausgangstemperatur in einem externen Wärmetauscher genutzt werden.

Durch die Verschaltung mit einem oder mehreren Wärmetauschern können zusätzlich die Ein- und damit auch die Austrittsbedingungen sowie die Temperaturspitzen in der monolithischen Zone gezielt gesteuert werden.

Aufgrund der Verschaltung und des Reaktoraufbaus ist eine lastflexible Regelung des Prozesses beherrschbar.

Durch die Verwendung unterschiedlicher Katalysatoren oder Katalysator-Konzentrationen kann zusätzlich die Reaktionsgeschwindigkeit und damit die Temperaturspitze kontrolliert werden.

Der erfindungsgemäße Reaktor kann als transportable Anlage ausgestaltet sein, insbesondere als SKID-basiertes System.

In einer weiteren Ausführung liegen die erfindungsgemäßen Reaktoren in modularer Bauweise vor, d.h. mindestens zwei oder mehr Reaktoren werden parallel verschaltet. Dadurch ergeben sich zusätzliche Möglichkeiten für eine bessere Lasteinstellung.

Aufgrund der getrennten Zuleitung der Reaktanden und der geringen Temperaturänderungen in diesen Zuleitungen können spezielle Bauweisen oder Verschaltungen mit einem oder mehreren Wärmetauschern von Produkten mit Reaktanden realisiert werden, die zu einer Erhöhung der Lastflexibilität führen.

Der erfindungsgemäße Reaktor, ggf. in Verschaltung mit einem oder mehreren Wärmeaustauschern, hat eine Lastflexibilität von 30 - 100%. Somit kann der Reaktor auch mit geringem Strom betrieben werden, mit bis zu 30% der Nominallast (100%). Dies ist insbesondere wichtig bei Verwendung z.B. von Biogas, dessen Zusammensetzung saisonal unterschiedlich ist, oder bei Verwendung von Begleitgas bei Erdölbohrungen, welches mit dem Betrieb der Erdölbohrung kontinuierlich abnimmt.

Durch eine Verschaltung mit Wärmeaustauschern können synergetische Effekte erzielt werden, da ein Teil der Wärme des Produktes in den Reaktor zurückgeführt wird, insbesondere zur Vorerwärmung der Reaktanden. Da die CPOX exotherm verläuft, muss oder sollte in den Reaktionsraum keine zusätzliche Wärme zugeführt werden.

In einer Ausführung der vorliegenden Erfindung ist der erfindungsgemäße Reaktor somit fluiddicht mit einem Wärmetauscher verbunden.

Der Wärmetauscher besitzt mindestens zwei Zuleitungen für ein fluides Kühlmedium sowie mindestens jeweils eine Zuleitung und eine Ableitung für das fluide Produkt des Reaktors.

In einer weiteren Alternative besitzt der Wärmetauscher zwei Kammern unterschiedlicher Größe bzw. zwei Kammern mit unterschiedlicher Kühlfläche.

In einer Alternative ist der Reaktor als zweistufiger Kreuzwärmetauscher ausgestaltet. In einer anderen Alternative können z.B. auch zwei Gegenstrom- oder Gleichstrom-Wärmetauscher zu einem einzigen Wärmetauscher verschaltet sein.

In einer weiteren Alternative ist der Wärmetauscher als mikrostrukturierter Wärmetauscher ausgestaltet.

Ferner besitzt der Wärmetauscher eine An-/Ausregelung, die in einer Alternative durch ein Ventil gewährleistet wird.

Die Kühlflächenteilung innerhalb des Wärmetauschers bzw. der beiden getrennten Kammern zueinander ist bevorzugt im Verhältnis 4:1 oder 3:1, bevorzugt 2:1.

Zum Umschalten zwischen den beiden Kühlflächenbereichen können in einer Alternative zwei Ventile genutzt werden.

Die mindestens zwei Zuleitungen sind so ausgestaltet, dass jeweils eine Zuleitung mindestens einer Kammer bzw. einer Kühlfläche des Wärmetauschers zugeordnet ist, und das Kühlmedium in den entsprechenden Bereich leitet.

Das Reaktionsprodukt aus dem erfindungsgemäßen Reaktor kann in dem Wärmetauscher fluiddicht geleitet werden und mittels des Kühlmediums gekühlt werden. Dass im Wärmetauscher erwärmte Kühlmedium kann ggf. als vorgewärmter Reaktand in den Reaktor zugeleitet werden.

Der erfindungsgemäße Reaktor und ggf. der erfindungsgemäße Wärmetauscher werden zur Herstellung von Synthesegas verwendet.

Gegenstand der vorliegenden Erfindung ist außerdem ein Verfahren zur Herstellung von Synthesegas, in welchem der erfindungsgemäße Reaktor eingesetzt wird. In einer bevorzugten Ausführung erfolgt die Synthese unter Hochdruck.

Das Verfahren ist dadurch gekennzeichnet, dass ein fluider Reaktand zunächst in einer inneren Zuleitung im Gleichstrom mit einem weiteren fluiden Reaktanden in der äußeren Zuleitung dem Mischer zugeführt wird.

Der fluide Reaktand der äußeren Zuleitung wird durch eine erste Mischerscheibe hindurchgeleitet und über Kanäle einer weiteren Mischerscheibe bevorzugt tangential in den Mischerraum geleitet, während der zweite fluide Reaktand der inneren Zuleitung, nach einer internen Strömungsumkehr am Mischerdeckel durch die weitere, zweite Mischerscheibe über Kanäle der ersten Mischerscheibe, bevorzugt tangential in den Mischerraum geleitet wird. Die Benennung erste und zweite sowie gegebenenfalls weitere Mischescheiben erfolgen in der Reihenfolge entlang der Strömungsrichtung der Reaktanden in den Zuleitungen.

In einem weiteren Schritt werden die beiden Reaktanden aus dem Mischerraum im Gegenstrom bezüglich der Zuleitung der Reaktanden vor dem Mischerraum durch ein erstes Hitzeschild zum Reaktionsraum geleitet.

Das dort gebildete Produkt wird ebenfalls im Gegenstrom zur Zuleitung der Reaktanden, ggf. durch ein weiteres Hitzeschild zur Ableitung aus dem Reaktor geführt.

In einer Alternative erfolgt die Ableitung aus dem Reaktionsraum ohne Strömung durch ein Hitzeschild.

In einer Ausführung kann das so gebildete Produkt in den oben beschriebenen Wärmetauscher geleitet werden und dort mittels eines fluiden Mediums gekühlt werden.

In einer bevorzugten Ausführung wird ein Gemisch aus Brennstoff und Wasserdampf als erster Reaktand in den Reaktor zugeleitet. In einer Alternative erfolgt dies in der inneren Zuleitung.

In der anderen davon getrennten Zuleitung wird Luft als zweiter fluider Reaktand eingeleitet, bevorzugt Luft, die vorher als Kühlmedium in dem Wärmetauscher erwärmt wurde. In einer Alternative erfolgt die Zuleitung von Luft in der äußeren Zuleitung.

In einer weiteren Ausführung der Erfindung kann zur Kühlung der Produktmenge eine weitere Zuleitung zum Wärmetauscher, entspricht also der Ableitung des Produkts, zugeschaltet werden, um so die Kühlfläche an die Produktmenge anzupassen.

In einer Alternative wird als Brennstoff methanhaltiges Gas verwendet. Dieses besteht im Wesentlichen aus Methan, kann aber weitere höhere Kohlenwasserstoffe, also Alkane und Alkene mit C2 - C10 Kohlenstoffen enthalten sowie aromatische Kohlenwasserstoffe, Alkyl-substituierte aromatische Kohlenwasserstoffe, insbesondere Benzol, Tolol und Xylol sowie jede beliebige Kombination dieser Stoffe.

Dem methanhaltigen Gas wird Dampf zugesetzt und über eine der beiden Zuleitungen des Reaktors, bevorzugt der Inneren in den Mischraum geleitet. Im Gleichstrom hierzu erfolgt die Zuleitung des weiteren Reaktanden, des Oxidationsmittels, bevorzugt in der äußeren Zuleitung. Vorteilhaft wird erfindungsgemäß Luft eingesetzt und nicht reiner Sauerstoff. Dadurch verringert sich der Aufwand zur Bereitstellung der Reaktanden.

Die Zuleitung erfolgt mit einer Strömungsgeschwindigkeit von mindestens 1m/s, bevorzugt 5-30 m/s, besonders 5-10 m/s.

In einer Alternative erfolgt die Mischung der Reaktanden dergestalt, dass 5 - 60 Vol.% Dampf im Reaktionsgemisch bezogen auf Methan im Mischraum enthalten sind, bevorzugt 10 - 50%, besonders bevorzugt 15 - 25 Vol%. Durch diesen Anteil an Dampf wird die Reaktionsgeschwindigkeit der Totaloxidation herabgesetzt und gleichzeitig die Temperaturdifferenz zur Temperaturspitze kontrolliert.

Die Temperatur im Reaktionsraum sollte wegen Katalysator- und Monolithmaterialien-Stabilität 1000°C nicht überschreiten, bevorzugt liegt sie bei 800 - 900°C.

Der Prozess kann zusätzlich dadurch gesteuert werden, dass ein CO2-Anteil von 5 - 60 Vol.%, bevorzugt 10 - 50 Vol.%, besonders bevorzugt 25 - 40 Vol.% in der Mischung der Reaktanden vorliegt.

Dadurch wird der Anteil an Synthesegas in der Stöchiometrie von H2:CO von 2:1 im Produktgas sowie die Effizienz der Umwandlung von CH4 oder verwandten Brennstoffen in CO erhöht. Gleichzeitig wird so die Temperaturspitze am Katalysator kontrolliert. Allgemein beziehen sich die hier gemachten Konzentrationsangaben auf die Stoffmischung CH4, CO2, H2O und O2, da sowohl eine Partialoxidation mit reinem Sauerstoff, oder auch mit Luft möglich ist; d.h. der Stickstoff als Ballast, der in der Luft vorhanden ist, wird hier nicht mit einkalkuliert.

Erfindungsgemäß vorteilhaft enthält mindestens einer der beiden Reaktanden, bevorzugt beide, CO2. Durch die Anwesenheit von CO2 im Reaktionsgemisch erfolgt aufgrund der Gleichgewichtsverschiebung eine vollständige Oxydation des Brennstoffs bis zu CO2 nur in sehr geringem Maße. Dadurch wird bezüglich der Kohlenstoffverwertung eine deutlich verbesserte Bilanz erzielt, als bei Einsatz von CO₂-freien Reaktanden. Insbesondere wird bei der CPOX keine CO₂-Abscheidung vor der Reaktion benötigt.

Die Verweilzeit am Katalysator im Reaktionsbereich liegt bei 1 - 500 ms, bevorzugt bei 2 - 100 ms, besonders bevorzugt bei 5 - 20 ms.

Die Strömungsgeschwindigkeit beträgt mindestens 0,25 m/s, bevorzugt 0,25 - 2 m/s, besonders bevorzugt 0,4 bis 0,8 m/s, insbesondere 0,6 m/s. Die Werte sind normiert auf 0°C und Normaldruck sowie Gesamtquerschnitt des Monolithkörpers -ggf. unter Abzug des Volumens der anderen strukturiertem Körper -, d.h. ohne Berücksichtigung der Erhöhung der Strömungsgeschwindigkeit durch die Wanddicke der Einzelkanäle.

Durch die relativ hohe Strömungsgeschwindigkeit wird die Lage der Temperaturspitze und die Steigung der Temperatur bei Eintritt in den Reaktionsraum reduziert, um bei einem Druck von bis ca. 30 bar eine vorgelagerte homogene Reaktion zu vermeiden.

In einer Ausführung beträgt die Temperaturspitze im Reaktor 500 - 1000°C, bevorzugt 700 - 900°C, besonders bevorzugt 750 - 800°C. Ab einer Temperatur von ca. 500°C kann die Selbstzündung des Gemisches erfolgen. Die Luft als Oxidationsmittel kann als vorerwärmter Luftstrom aus dem Wärmetauscher eingesetzt werden und unter Druck mit einer Temperatur von 250 - 600°C, bevorzugt 450 - 550°C, besonders bevorzugt 350 - 500°C in dem Mischraum des Reaktors zugeleitet werden. Somit kann auch bei einer beliebigen Reduzierung auf bis zu 30% der Nennlast eine Mischtemperatur im Mischraum von Brennstoff, Wasserdampf und Luft von 200 - 400°C, bevorzugt 250 - 350°C erreicht werden.

Der erfindungsgemäße Reaktor kann in der Erdöl- und Erdgasindustrie verwendet werden. Im Falle von zu weiten Transportwegen oder zu kleinen Mengen an Begleit- oder Raffineriegas, welches abgefackelt werden muss, um Treibhausgaspotenzial zu vermindern, kann der erfindungsgemäße Reaktor eingesetzt werden. Ferner kann er auch in Verbindung mit Blockheizkraftwerken eingesetzt werden.

Der erfindungsgemäße Reaktor wird auch mit Biogas als Brennstoff verwendet. Die Verstromung oder Einspeisung von Biogas ist in Abhängigkeit vom Marktpreis von Strom oder Erdgas nur sehr begrenzt rentabel. Durch die Verwendung von Biogas als Brennstoff im erfindungsgemäßen Reaktor und Verfahren kann dieses effizienter genutzt werden.

Des Weiteren kann der erfindungsgemäße Reaktor zur Erzeugung kleiner Mengen von Synthesegas oder Wasserstoff für industrielle Zwecke eingesetzt werden. Beispielhaft ist hier die Fischer-Tropsch-Synthese zu nennen, Synthesegas- oder Wasserstofferzeugung aus flüssigen Kohlenwasserstoffen.

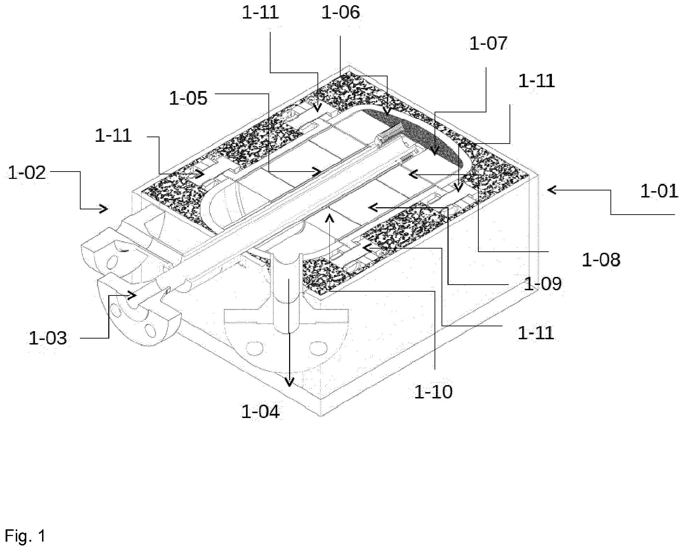

In einer Ausführung wird der erfindungsgemäße Reaktor und der erfindungsgemäße Wärmeaustauscher wie folgt in dem erfindungsgemäßen Verfahren zur Herstellung von Synthesegas eingesetzt:
Der Reaktor (1-01) ist in Fig. 1 dargestellt: Gezeigt wird das Reaktorgehäuse im Querschnitt .

Die Schrauben (1-11) werden zur Demontage gelöst und die Reaktorhülle und Reaktor geöffnet. Deutlich ist die leichte Zugänglichkeit der einzelnen Elemente des Reaktors erkennbar. Die stabile Bauweise erlaubt einen Betrieb unter Hochdruck, bevorzugt bei ca. 30 bar.

Für die Herstellung von Synthesegas wird bevorzugt in die äußere Zuleitung (1-02) der beiden ineinander liegenden Zuleitungen, die bevorzugt als Doppelrohr vorliegenden, Luft eingeströmt.

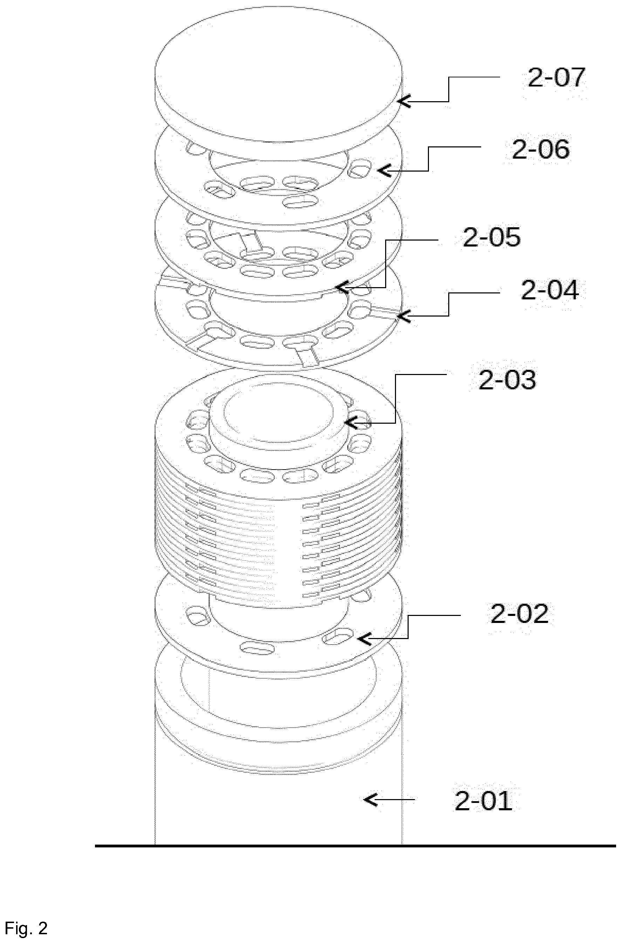

In die innere Zuleitung (1-03) wird der zweite Reaktand, bevorzugt ein Brennstoff, bevorzugt enthaltend CH4 gemischt mit Wasserdampf, eingeströmt. Der Wasserdampf wird bevorzugt extern erzeugt, kann aber auch als Aerosol im Gas vorliegen bzw. im Mischer zerstäubt werden. Die beiden ineinander liegenden Zuleitungen (1-05) befördern die beiden Reaktanden in axialer Richtung bis zum Mischer (1-06). Der Mischer ist in Fig. 2 dargestellt. Der Mischer besteht aus einem Mischerboden, der bevorzugt als Scheibe vorliegt, so, dass durch die Öffnung der Scheibe die innere Zuleitung (2-03 = 1-03) durchgeführt wird. Der Mischerboden (2-02) verschließt die äußere Zuleitung (2-01 = 1-02) und hat mehrere Bohrungen für den Durchfluss des Reaktanden der äußeren Zuleitung, bevorzugt Luft. Auf den Mischerboden folgt eine Mischerscheibe (2-04) mit den entsprechenden Kanälen für den Mischeraustritt des Reaktanden der inneren Zuleitung, bevorzugt Gas und Wasserdampf. Diese Scheibe weist Bohrungen auf, durch welche der Reaktant der äußeren Zuleitung, bevorzugt die Luft, durchströmen kann.

Daran schließt sich eine weitere Scheibe (2-05) an, die mit den Kanälen für den Mischeraustritt des Reaktanden der äußeren Zuleitung, bevorzugt Luft, versehen ist. Die Scheiben mit Mischeraustritt für die Reaktanden (2-04) und (2-05) können beliebig oft eingesetzt werden, wie in Fig. 2 dargestellt. Auf die letzte Scheibe mit Mischeraustritt für den Reaktanden der äußeren Zuleitung folgt der Mischerabschluss (2-06). Dieser hat Bohrungen für den Durchgang des Reaktanden der inneren Zuleitung, bevorzugt Gas und Wasserdampf.

Wie oben beschrieben, werden die Elemente Mischerboden (2-02), Scheiben mit Mischeraustritt der Reaktanden (2-04 und 2-05), in beliebiger Anzahl sowie der Mischerabschluss (2-06) fluiddicht miteinander verbunden, so dass die Reaktanden durch die entsprechenden Bohrungen strömen können. Diese Scheiben werden bevorzugt miteinander verschweißt und auf die innere Zuleitung, bevorzugt das innere Rohr des Doppelrohrs aufgesetzt und daran befestigt, bevorzugt geschweißt.

Als letztes Element weist der Mischer den Mischerdeckel (2-7) auf, der eine Strömungsumlenkung für den Reaktanden der inneren Zuleitung verantwortlich ist.

Die Mischeraustritte für die Reaktanden liegen versetzt vor, so dass eine gute Durchmischung im Mischerraum (1-07) gewährleistet ist.

Der Mischerraum weist bevorzugt eine ggf. teilweise Füllung mit einem keramischen Schaum oder Pulver auf.

Außerhalb der Zuleitung wird die Mischung der Reaktanden im Gegenstrom zu dem Reaktionsraum (1-09) durch das Hitzeschild (1-08) geführt.

Nach der Reaktion wird das Produkt, bevorzugt Reformat, weiter im Gegenstrom bezüglich der Zuleitung ggf. durch ein weiteres Hitzeschild (1-10) zur Ableitung (1-04) geführt.

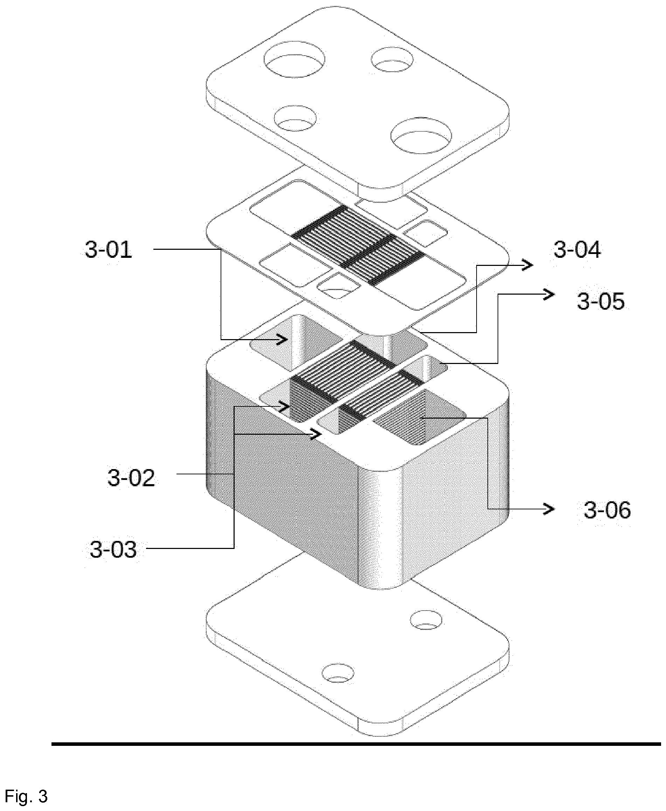

In einer Ausführung der Erfindung wird das Produkt in einen Wärmetauscher geleitet. Eine Alternative des Wärmetauschers ist in Figur 3 dargestellt. Das Produkt wird über den Eingang (3-01) in den Wärmetauscher geleitet. Über die Eingänge 1 und/oder 2 (3-02 und/oder 3-03) wird Kühlmedium, bevorzugt Luft, in den Wärmetauscher geleitet. Das erwärmte Kühlmedium wird über die Ausgänge 1 und 2 (3 - 04 und/oder 3 - 05) abgeleitet, während das gekühlte Produkt bevorzugt Reformat über Ausgang (3 - 06) weitergeleitet wird.

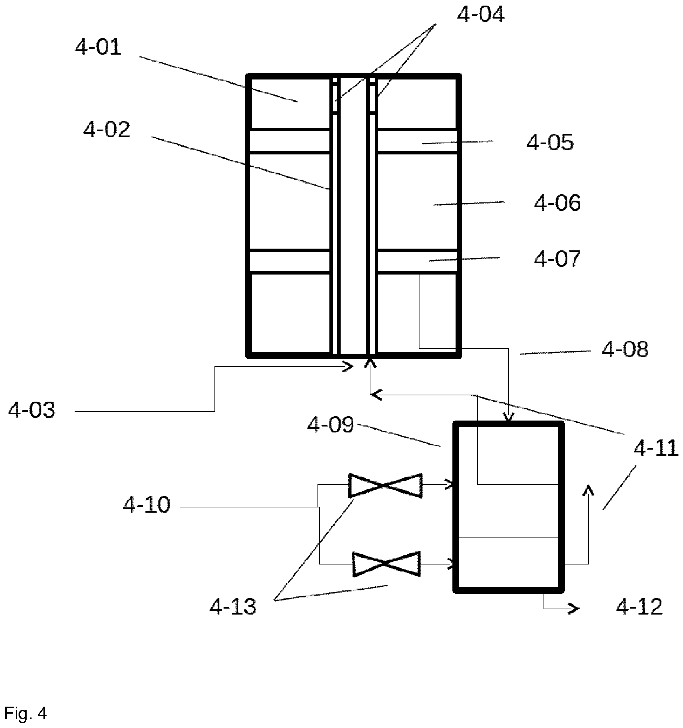

Ein bevorzugter Aufbau des erfindungsgemäßen Reaktors mit erfindungsgemäßem Wärmetauscher ist schematisch in Fig. 4 dargestellt. Synergetische Effekte können erzielt werden, in dem das erwärmte Kühlmedium (4 - 11) bevorzugt Luft, als Reaktand in den Reaktor, bevorzugt die äußere Zuleitung, geführt wird.

### Beispiele:

Für die Versuche wurde ein Reaktor eingesetzt mit einem ersten Hitzeschild, Reaktionsraum mit 2 Monolithen mit identischem Katalysator (kommerziell) seriell, ein zweites Hitzeschild. Monolithen für die Hitzeschilde und im Reaktionsraum aus Cordierit.

**Versuchsbedingungen**

| Versuch | 1 | 2 | 3 | 4 |
|---|---|---|---|---|
| xᵢ [%] CH4,CO2, O2,N2,H2 O | 17,24;11,50;10, 77;43,25;17,24 | 17,24;11,50;10, 77;43,25;17,24 | 16,67;11,11;11, 11;44,44;16,67 | 17,24;11,50;10,7 7;43,25;17,24 |
| v [m/s] bei 0°C und 1,013 bar | 0.52 | 0.42 | 0.43 | 0.52 |
| p [bar] | 30 | 20 | 20 | 1 |
| Tₑᵢₙ [°C] | Ca. 340 | Ca. 340 | Ca. 340 | Ca. 320 |
| Tₘₐₓ [°C] | 834 | 832 | 865 | 800 |
| X_{CH4} [%] | 79 | 79 | 83 | 88 |
| S_{H2} [%] | 83 | 79 | 81 | 92 |
| S_{CO} [%] | 81 | 72 | 77 | 81 |

| | | | | |
|---|---|---|---|---|
| Xi: Anteile der Reaktanden im Mischerraum in % v: Strömungsgeschwindigkeit p: Druck in Zuleitungen bzw. Reaktor Tein: Temperatur der Reaktanden in Zuleitung Tmax: maximale Temperatur im Reaktor / Reaktorraum X(CH4): Umsatz CH4 S(H2): Selektivität zu Wasserstoff S(CO): Selektivität zu Kohlenmonoxid | | | | |

### Legende:

Die Figuren sind lediglich eine schematische Darstellung, die Größenverhältnisse können variieren.
1-01 - Reaktor
1-02 - äußere Zuleitung für fluiden Reaktand, bevorzugt Luft
1-03 - innere Zuleitung für fluiden Reaktand, bevorzugt Gas + Dampf
1-04 - Ableitung Produkt, bevorzugt Synthesegas (Reformat)
1-05 - ineinander-liegende Zuleitungen, bevorzugt Doppelrohr
1-06 - Mischer
1-07 - Mischerraum, bevorzugt Füllung mit keramischem Schaum
1-08 - Hitzeschild (Monolith)
1-09 - Reaktionsraum, funktionalisierter Monolith (Katalysator)
1-10 - Hitzeschild (Monolith)
1-11 - Schrauben zum Öffnen und Verschließen des Reaktors und der Reaktorhülle
2-01 - Äußere Zuleitung, bevorzugt Außenrohr
2-02 - Mischerboden mit Durchgang für Reaktand äußerer Zuleitung, bevorzugt Luft
2-03 - Innere Zuleitung, bevorzugt Innenrohr
2-04 - Scheibe mit Mischeraustritt Reaktand der inneren Zuleitung, bevorzugt Gas + Dampf
2-05 - Scheibe mit Mischeraustritt Reaktand der äußeren Zuleitung, bevorzugt Luft
2-06 - Mischerabschluß mit Durchgang Reaktand der inneren Zuleitung, bevorzugt Gas + Dampf
2-07 - Mischerdeckel mit Strömungsumlenkung für Reaktand der inneren Zuleitung, bevorzugt
Gas + Dampf
3-01 - Eingang Produkt aus Reaktor, bevorzugt Synthesegas (Reformat)
3-02 - Eingang 1 Kühlmedium, bevorzugt Luft
3-03 - Eingang 2 Kühlmedium, bevorzugt Luft
3-04 - Ausgang 1 erwärmtes Kühlmedium, bevorzugt Luft
3-05 - Ausgang 2 erwärmtes Kühlmedium, bevorzugt Luft
3-06 - Ausgang gekühltes Produkt, bevorzugt Synthesegas (Reformat)
4-01 - Reaktor = 1-01
4-02 - Innere und äußere Zuleitung, bevorzugt als Doppelrohr
4-03 - Reaktand innere Zuleitung, bevorzugt Gas + Dampf
4-04 - Mischer = 1-06
4-05 - Hitzeschild = 1-08
4-06 - Reaktionsraum, funktionalisierter Monolith
(Katalysator) = 1-09
4-07 - Hitzeschild = 1-10
4-08 - Produkt, bevorzugt Synthesegas (Reformat) , = 1-04
4-09 - Wärmetauscher
4-10 - Kühlmedium, bevorzugt Luft, = 3-03 und/oder 3-04
4-11 - erwärmtes Kühlmedium, bevorzugt Luft, 3-04 und/oder 3-05 und 1-02
4-12 - gekühltes Produkt, bevorzugt Synthesegas (Reformat)
4-13 - Ventile

## Patentansprüche

1. Reaktor (1-01) zur Herstellung von Synthesegas mit einem Mischer (1-06), einem Mischraum (1-07), einem Reaktorraum, Zuleitungen für mindestens zwei fluide Reaktanten und Ableitung für mindestens ein fluides Produkt und eine diese umgebende Reaktorhülle, enthaltend
- zwischen Reaktorhülle und Mischer im Inneren des Reaktors eine äußere fluiddichte Zuleitung (1-02) für mindestens einen Reaktanten in welcher mindestens eine fluiddichte Zuleitung (1-03) für einen weiteren Reaktanten angeordnet ist
und
- einen Gegenstromaufbau, bezüglich der Strömung der Reaktanten in der Zuleitung, zwischen Mischraum und Ableitung aufweisend,
**gekennzeichnet durch**
den Mischer und **dadurch, dass**
der Mischer
- einen Mischerboden (2-02),
- mindestens eine Mischer-Scheibe (2-04) mit nach außen in den Mischraum führenden Kanälen für das erste Fluid,
- mindestens eine Mischer-Scheibe (2-05) mit nach außen in den Mischraum führenden Kanälen für das zweite Fluid,
- einen Mischerabschluss (2-06) und
- einen Mischerdeckel (2-07) enthält.

2. Reaktor nach Anspruch 1, **dadurch gekennzeichnet, dass** die getrennten Zuleitungen ein konzentrisches Doppelrohr sind.

3. Reaktor nach einem der vorangehenden Ansprüche **dadurch gekennzeichnet, dass** der Mischer fluiddicht mit den Zuleitungen verbunden ist.

4. Reaktor nach einem der vorangehenden Ansprüche enthaltend mindestens einen mit Katalysator funktionalisierten monolithischen Körper.

5. Reaktor nach einem der vorangehenden Ansprüche enthaltend mindestens ein Hitzeschild aus mindestens einem monolithischen Körper.

6. Reaktor nach Anspruch 4 und 5 **dadurch gekennzeichnet, dass** der mindestens eine mit Katalysator funktionalisierte monolithische Körper und der Hitzeschild aus mindestens einem monolithischen Körper jeweils als Lage / Schicht um die Zuleitungen innerhalb der Reaktorhülle angeordnet ist.

7. Reaktor nach einem der vorangehenden Ansprüche **dadurch gekennzeichnet, dass** der Reaktor einen Wärmetauscher umfasst, wobei der Reaktor fluiddicht mit dem Wärmetauscher verbunden ist.

8. Reaktor nach Anspruch 7 **dadurch gekennzeichnet, dass** der Wärmetauscher mindestens zwei Zuleitungen für ein fluides Kühlungsmedium und mindestens eine Zuleitung und eine Ableitung für das fluide Produkt des Reaktors aufweist.

9. Reaktor nach Anspruch 7 oder 8 **dadurch gekennzeichnet, dass** der Wärmetauscher mindestens zwei Kammern unterschiedlicher Größe besitzt.

10. Verwendung eines Reaktors nach einem der Ansprüche 1 - 9 zur Herstellung von Synthesegas.

11. Verfahren zur Herstellung von Synthesegas **dadurch gekennzeichnet, dass** ein Reaktor nach einem der Ansprüche 1 - 9 eingesetzt wird.

12. Verfahren nach Anspruch 11 zur Herstellung von Synthesegas unter Hochdruck.

13. Verfahren nach Anspruch 11 oder 12 **dadurch gekennzeichnet, dass** ein erster fluider Reaktant durch Öffnungen einer ersten Mischer-Scheibe über Kanäle für das erste Fluidum einer zweiten Mischer-Scheibe in den Mischraum geleitet wird und ein zweiter fluider Reaktant nach einer internen Strömungsumkehr am Mischerdeckel durch Öffnungen einer zweiten Mischer-Scheibe über Kanäle für das zweite Medium der ersten Mischer-Scheibe in den Mischraum geleitet wird.

14. Verfahren nach einem der Ansprüche 11 bis 13 **dadurch gekennzeichnet, dass** die Reaktanden in getrennter Stromführung in den beiden ineinander liegenden Zuleitungen in den Mischer geführt werden, und anschließend als Gemisch im Gegenstrom durch ein erstes Hitzeschild zum Reaktionsraum geleitet werden und das dort gebildete Produkt ebenfalls im Gegenstrom zur Zuleitung der Reaktanden, gegebenenfalls durch mindestens ein weiteres Hitzeschild, zur Ableitung des Produkts geführt wird.

15. Verfahren nach einem der Ansprüche 11 bis 14 **dadurch gekennzeichnet, dass** das so gebildete Produkt in den Wärmetauscher geleitet wird und dort bevorzugt im Kreuzstrom mit einem fluiden Medium gekühlt wird.

16. Verfahren nach einem der Ansprüche 11 bis 15 **dadurch gekennzeichnet, dass** in einer Zuleitung des Reaktors (bevorzugt der inneren) ein Gemisch aus Brennstoff und Wasserdampf als ein erster Reaktant eingeleitet wird und in der anderen, getrennten Zuleitung (bevorzugt äußeren) Luft als zweiter fluider Reaktant eingeleitet wird, bevorzugt Luft, die in dem Wärmetauscher als Kühlmedium vorher erwärmt wurde.

17. Verfahren nach einem der Ansprüche 11 bis 16 **dadurch gekennzeichnet, dass** die Kühlfläche des Wärmetauschers durch Zuschalten der mindestens einer weiteren Zuleitung an die Produktmenge angepasst wird.

## Claims

1. Reactor (1-01) for the preparation of synthesis gas with a mixer (1-06), a mixing space (1-07), a reactor space, inlets for at least two fluid reactants and outlet for at least one fluid product and a reactor shell encompassing these, containing
- between reactor shell and mixer in the interior of the reactor, an outer fluid-tight inlet (1-02) for at least one reactant within which at least one fluid-tight inlet (1-03) for a further reactant is disposed
and
- having a countercurrent construction, with regard to the flow of the reactants in the inlet, between mixing space and outlet,
**characterised by**
the mixer and in that
the mixer contains
- a mixer base (2-02),
- at least one mixer disc (2-04) with channels for the first fluid leading outwards into the mixing space,
- at least one mixer disc (2-05) with channels for the second fluid leading outwards into the mixing space,
- a mixer closure (2-06) and
- a mixer lid (2-07).

2. Reactor according to claim 1, **characterized in that** the separate inlets are a concentric double tube.

3. Reactor according to any one of the preceding claims, **characterized in that** the mixer is connected fluid-tightly to the inlets.

4. Reactor according to any one of the preceding claims containing at least one monolithic body functionalised with catalyst.

5. Reactor according to any one of the preceding claims, containing at least one heat shield made from at least one monolithic body.

6. Reactor according to claim 4 and 5, **characterized in that** the at least one monolithic body functionalised with catalyst and the heat shield made from at least one monolithic body are each arranged as a ply/layer around the inlets within the reactor shell.

7. Reactor according to any one of the preceding claims, **characterized in that** the reactor comprises a heat exchanger, wherein the reactor is connected fluid-tightly to the heat exchanger.

8. Reactor according to claim 7, **characterized in that** the heat exchanger comprises at least two inlets for a fluid cooling medium and at least one inlet and one outlet for the fluid product from the reactor.

9. Reactor according to claim 7 or 8, **characterized in that** the heat exchanger has at least two chambers of different sizes.

10. Use of a reactor according to any one of claims 1 - 9 for the production of synthesis gas.

11. Method for producing synthesis gas **characterized in that** a reactor according to any one of claims 1 - 9 is used.

12. Method according to claim 11 for the production of synthesis gas under high pressure.

13. Method according to claim 11 or 12, **characterized in that** a first fluid reactant is guided into the mixing space through openings of a first mixer disc via channels for the first fluid of a second mixer disc, and a second fluid reactant after an internal flow reversal at the mixer lid is guided into the mixing space through openings of a second mixer disc via channels for the second medium of the first mixer disc.

14. Method according to any one of claims 11 to 13, **characterized in that** the reactants are guided into the mixer in separate flow in the two inlets lying one inside the other, and are then guided as a mixture in countercurrent through a first heat shield to the reaction space, and the product formed there is likewise guided in countercurrent to the inlet of the reactants, optionally through at least one further heat shield, to the outlet of the product.

15. Method according to any one of claims 11 to 14, **characterized in that** the product thus formed is guided into the heat exchanger and is preferably cooled in crosscurrent with a fluid medium there.

16. Method according to one of the claims 11 to 15, **characterized in that** in one inlet to the reactor (preferably the inner one) a mixture of fuel and water vapour is introduced as a first reactant and in the other, separate inlet (preferably outer one) air is introduced as a second fluid reactant, preferably air which has been previously heated as a cooling medium in the heat exchanger.

17. Method according to one of the claims 11 to 16, **characterised in that** the cooling surface of the heat exchanger is adapted to the amount of product by connecting the at least one further inlet.

## Revendications

1. Réacteur (1-01) pour la production de gaz de synthèse, comportant un mélangeur (1-06), une chambre de mélange (1-07), une chambre de réacteur, des conduites d'alimentation pour au moins deux réactifs fluides et une conduite d'évacuation pour au moins un produit fluide, et une enceinte de réacteur entourant ceux-ci, comprenant
- entre l'enceinte de réacteur et le mélangeur, à l'intérieur du réacteur, une conduite d'alimentation extérieure (1-02), étanche aux fluides, pour au moins un réactif, dans laquelle est disposée au moins une conduite d'alimentation (1-03), étanche aux fluides, pour un autre réactif,
et
- une structure à contre-courant par rapport à l'écoulement des réactifs dans la conduite d'alimentation, située entre la chambre de mélange et la conduite d'évacuation,
**caractérisé par** ledit mélangeur et en ce que
le mélangeur comprend
- un fond de mélangeur (2-02),
- au moins un disque mélangeur (2-04) présentant des canaux pour le premier fluide, qui mènent vers l'extérieur dans la chambre de mélange,
- au moins un disque mélangeur (2-05) présentant des canaux pour le deuxième fluide, qui mènent vers l'extérieur dans la chambre de mélange,
- une fermeture de mélangeur (2-06), et
- un couvercle de mélangeur (2-07).

2. Réacteur selon la revendication 1, **caractérisé en ce que** les conduites d'alimentation séparées constituent un double tube concentrique.

3. Réacteur selon l'une des revendications précédentes, **caractérisé en ce que** le mélangeur est relié aux conduites d'alimentation de manière étanche aux fluides.

4. Réacteur selon l'une des revendications précédentes, comprenant au moins un corps monolithique fonctionnalisé avec un catalyseur.

5. Réacteur selon l'une des revendications précédentes, comprenant au moins un bouclier thermique constitué d'au moins un corps monolithique.

6. Réacteur selon les revendications 4 et 5, **caractérisé en ce que** ledit au moins un corps monolithique fonctionnalisé avec un catalyseur et le bouclier thermique constitué d'au moins un corps monolithique sont disposés chacun en tant que couche / strate autour des conduites d'alimentation à l'intérieur de l'enceinte de réacteur.

7. Réacteur selon l'une des revendications précédentes, **caractérisé en ce que** le réacteur comprend un échangeur de chaleur, le réacteur étant relié à l'échangeur de chaleur de manière étanche aux fluides.

8. Réacteur selon la revendication 7, **caractérisé en ce que** l'échangeur de chaleur comprend au moins deux conduites d'alimentation pour un milieu de refroidissement fluide et au moins une conduite d'alimentation et une conduite d'évacuation pour le produit fluide du réacteur.

9. Réacteur selon la revendication 7 ou 8, **caractérisé en ce que** l'échangeur de chaleur comporte au moins deux chambres de tailles différentes.

10. Utilisation d'un réacteur selon l'une des revendications 1 à 9 pour la production de gaz de synthèse.

11. Procédé de production de gaz de synthèse, **caractérisé en ce que** l'on utilise un réacteur selon l'une des revendications 1 à 9.

12. Procédé selon la revendication 11 pour la production de gaz de synthèse sous haute pression.

13. Procédé selon la revendication 11 ou 12, **caractérisé en ce qu'**un premier réactif fluide est introduit dans la chambre de mélange par des ouvertures d'un premier disque mélangeur via des canaux, destinés au premier fluide, d'un deuxième disque mélangeur, et un deuxième réactif fluide est introduit dans la chambre de mélange, après une inversion interne de l'écoulement au niveau du couvercle de mélangeur, par des ouvertures d'un deuxième disque mélangeur via des canaux, destinés au deuxième milieu, du premier disque mélangeur.

14. Procédé selon l'une des revendications 11 à 13, **caractérisé en ce que** les réactifs sont amenés dans le mélangeur en courants séparés dans les deux conduites d'alimentation situées l'une dans l'autre, et sont ensuite amenés sous forme de mélange à contre-courant à travers un premier bouclier thermique vers la chambre de réaction, et le produit qui s'y forme est également amené à contre-courant par rapport à la conduite d'alimentation des réactifs, le cas échéant à travers au moins un autre bouclier thermique, vers la conduite d'évacuation du produit.

15. Procédé selon l'une des revendications 11 à 14, **caractérisé en ce que** le produit ainsi formé est envoyé dans l'échangeur de chaleur où il est refroidi de préférence en courants croisés avec un milieu fluide.

16. Procédé selon l'une des revendications 11 à 15, **caractérisé en ce que** dans une conduite d'alimentation du réacteur (de préférence la conduite intérieure), on introduit comme premier réactif un mélange de combustible et de vapeur d'eau, et dans l'autre conduite d'alimentation séparée (de préférence la conduite extérieure), on introduit comme deuxième réactif fluide de l'air, de préférence de l'air qui a été préalablement chauffé comme milieu de refroidissement dans l'échangeur de chaleur.

17. Procédé selon l'une des revendications 11 à 16, **caractérisé en ce que** la surface de refroidissement de l'échangeur de chaleur est adaptée au débit de produit par la mise en circuit d'au moins une autre conduite d'alimentation.
